# EUROPEAN PATENT SPECIFICATION

(11) **EP 1 966 027 B1**
(45) Date of publication and mention of the grant of the patent: **24.02.2010**
(21) Application number: 05823743.9
(22) Date of filing: 22.12.2005
(51) Int. Cl.: B62D 1/183, B62D 33/06, E02F 9/16, E02F 9/20

(54) **CAB STRUCTURE FOR A VEHICLE**
KABINENSTRUKTUR FÜR EIN FAHRZEUG
STRUCTURE DE CABINE POUR UN VEHICULE

(43) Date of publication of application: 10.09.2008
(73) Proprietor: Volvo Construction Equipment AB, 631 85 Eskilstuna (SE)
(72) Inventor: HÅKANSSON, Jon, S-644 32, Torshälla (SE)
(74) Representative: Fröhling, Werner Otto
(86) International application number: PCT/SE2005/002021
(87) International publication number: WO 2007/073261

(56) References cited:
- EP-A2- 0 950 600
- US-A- 3 362 247
- US-A1- 2004 140 145
- US-B1- 6 223 620
- US-B1- 6 694 240

## Description

The present invention relates to a cab structure comprising a driver's seat and a steering device, in accordance with the preamble of claim 1.

Such a cab structure is described in US-A1-2004 140 145.

The cab structure is primarily intended for vehicles with electronic steering, so-called steer-by-wire, where the movement of the wheel is transferred electronically to the wheels, in contrast to mechanical steering where the movement of the steering wheel is transferred to the wheels via a mechanical link.

More specifically, the cab structure is intended for working vehicles, for example in the form of mobile cranes and excavators, where a steering device in the form of a steering wheel and a steering column are normally arranged in front of the driver's seat, with the steering column attached to the floor of the cab or to the instrument panel in front of the driver. The controls for controlling the crane arm, scoop or similar implements are normally arranged beside the driver's seat, for example in the arm rest.

For vehicles of this type, the propulsion of the vehicle itself is regarded as a secondary function. The primary function of a working vehicle, such as for example an excavator, is the work carried out using the implement or implements with which the vehicle is provided, such as for example a crane arm or a scoop. While carrying out the work with such an implement, the driver needs to be able see clearly in all directions while sitting down in order to be able to carry out work with the implement around the vehicle. The driver also needs to be able to move relatively freely inside the cab. A steering device that is positioned in front of the driver as described above and in accordance with previously known technology makes it more difficult for the driver to carry out work with such an implement, as it obstructs a part of the driver's field of vision and also limits the driver's room to move.

### DISCLOSURE OF INVENTION

A main object of the present invention is to provide a cab structure comprising a driver's seat and a steering device, in which the steering device does not restrict the driver's field of vision or room to move.

This object is achieved by a cab structure for a vehicle, comprising a driver's seat and a steering device, with the characteristics that are apparent from claim 1 below.

The invention consists of a cab structure according to claim 1.

According to a preferred embodiment of the invention, the steering device is attached to the frame of the driver's seat. This makes it possible to mount the steering device in the cab structure in such a way that the steering device can be folded away essentially completely under the driver's seat in a simple way when it is not being used by the driver. In this way, the driver's room to move and his field of vision are not restricted, when carrying out work with the vehicle's implement.

According to another preferred embodiment, the steering device is activated in its first raised position by a first trigger arranged in the cab structure.

Additional advantageous embodiments and advantages of the invention are apparent from the following description, claims and drawings.

### BRIEF DESCRIPTION OF DRAWINGS

The invention will be described in greater detail in the following with reference to the attached drawings, in which
- Figure 1: shows an excavator in a side view,
- Figure 2: shows a schematic side view of a steering device for electronic steering, so-called steer-by-wire, in a first raised and second lowered position, arranged in a cab structure according to the invention,
- Figure 3: shows a side view of a steering device according to Figure 1 in an active raised position,
- Figure 4: shows a sectioned perspective view of a releasing mechanism for a steering device according to Figure 1,
- Figure 5: shows a sectioned side view of a locking device for a steering device according to Figure 1,
- Figure 6: shows a steering device according to Figure 1 arranged in the frame of the seat under a driver's seat,
- Figure 7: shows an additional steering device for controlling an implement arranged on the vehicle.

### MODES FOR CARRYING OUT THE INVENTION:

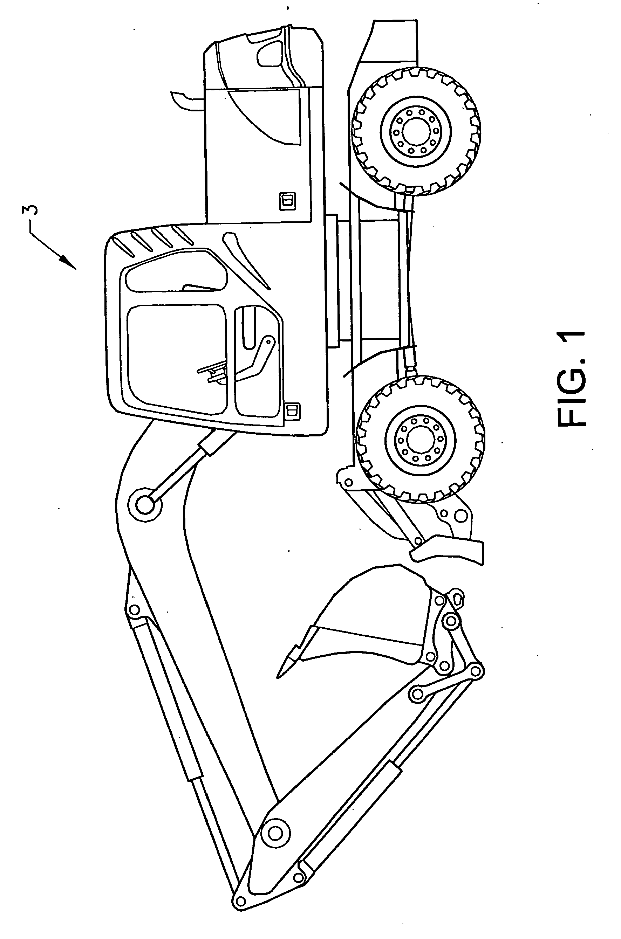

Figure 1 shows a working machine in the form of an excavator with a cab structure 3 according to the invention.

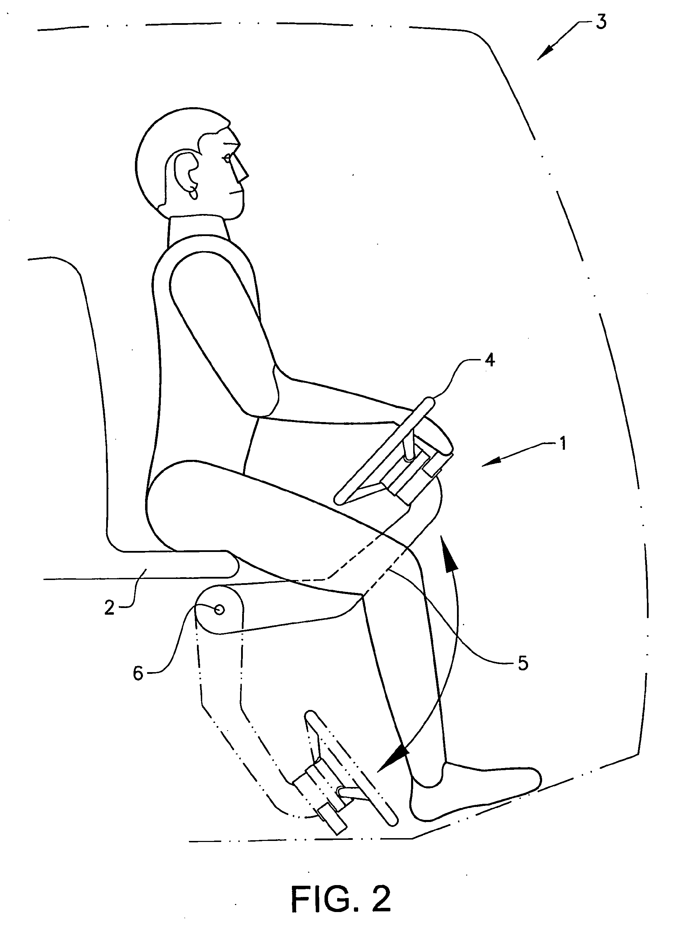

Figure 2 shows a simplified side view of a steering device 1 for electronic steering, so-called steer-by-wire, and a driver's seat 2 arranged in a cab structure 3. The steering device 1 is arranged in front of and essentially under the driver's seat 2 and comprises a steering wheel 4 arranged on a steering column 5, which steering column 5 is attached to the cab structure 3 under the driver's seat 2 and is arranged to be able to be pivoted around a pivot shaft 6. The figure shows the steering device 1 in a first active, raised position, and in a second inactive, folded-away position (dotted).

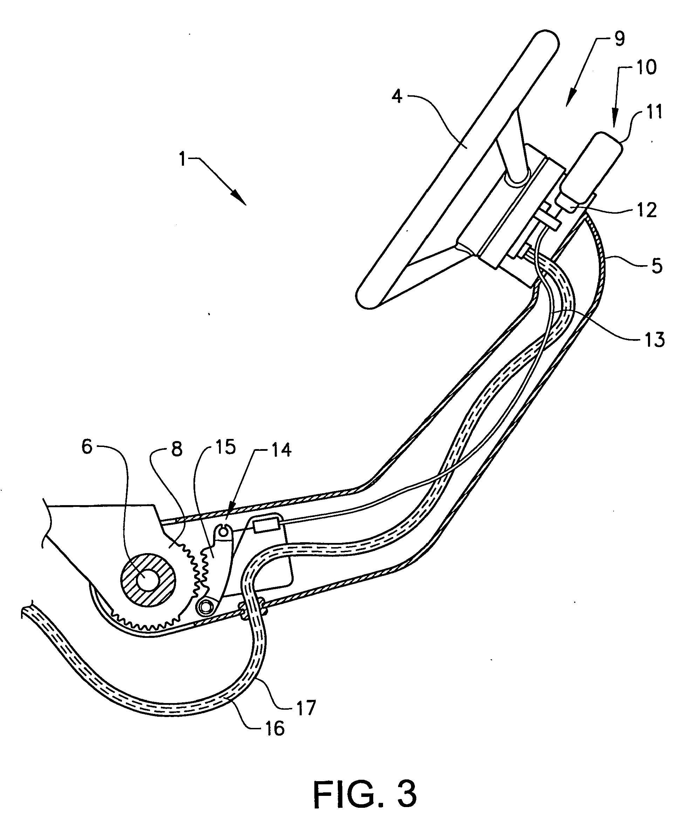

Figure 3 shows a side view of the steering device 1 in an active raised position. The steering column 5 is mounted on a pivot shaft 6 in such a way that it is hinged, around which pivot shaft it can also be pivoted. The ends of the pivot shaft 6 are connected to two fixings 7', 7" arranged on each side of the steering column 5, and the steering device 1 is attached to the cab structure 3 via the fixings 7', 7". A toothed segment 8 is also mounted on the pivot shaft 6, which pivot shaft is attached to the cab structure 3 in a similar way to the fixings 7', 7".

When the steering device 1 is raised, it is activated by a contact-free position sensor (not shown) arranged in the steering device 1 being acted upon in at least a given upper position, when the steering device 1 is moved upwards towards the driver's seat 2 to lock it in its active position. In a corresponding way, the position sensor is acted upon when the steering device 1 is folded down towards its inactive and folded away position, whereupon the steering device 1 is inactivated and the propulsion of the vehicle is blocked, for example by a gear selector arranged in the vehicle not being able to be moved from a neutral position.

In addition, the steering device 1 is provided with a folding mechanism 9 for releasing the steering column 5, which folding mechanism 9 comprises a releasing mechanism 10 comprising a handle 11 arranged in association with the steering wheel 4 by means of which the driver can raise and lower the steering device 1. In addition, the folding mechanism 9 comprises a releasing device 12 arranged in the handle 11 and interacting with this, a wire 13 connected to the releasing mechanism 10 and a locking device 14 connected to the other end of the cable 13. The locking device 14 comprises a toothed catch 15, which catch 15 is arranged under tension in the steering column 5 and a toothed segment 8 that interacts with the catch 15. When the releasing device 12 is pressed upwards towards the handle 11, the cable 13 that is connected to the releasing mechanism 10 is pulled upwards and the toothed catch 15 is released from its engagement with the toothed segment 8. By this means, the steering column 5 is released and is then able to pivot upwards or downwards. When the steering device 1 is in the required position, it is locked by the releasing mechanism 10 being released, which means that the toothed catch 15 re-engages with the toothed segment 8, whereby the steering column 5 is locked in the required position.

The figure also shows cables 16 for the electronic steering that are enclosed in a protective sleeve 17 that runs inside the steering column 5, from the steering wheel 4 and down through the steering column 5.

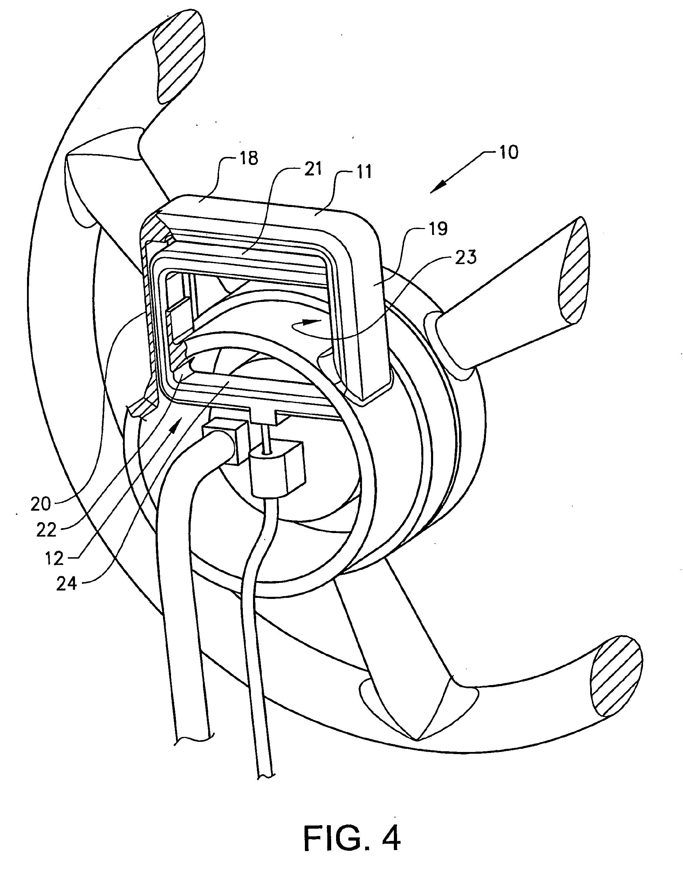

Figure 4 shows a sectioned perspective view of the releasing mechanism 10, namely the handle 11 and the releasing device 12. The handle 11 is arranged on the upper part of the steering column 5 in association with the steering wheel 4, and has a C-shaped design which comprises an upper part 18 that is connected at the ends to two parallel sides 19, 20, each of which is connected at its lower part to the steering column 5. The releasing device 12, that interacts with the handle 11, has a rectangular design with an upper part 21 and two parallel sides 22, 23 arranged inside the handle 11, and a lower part 24, parallel with the upper part 21, which lower part 24 is arranged inside the steering column 5. The releasing device 12 is arranged to be able to move upwards and downwards inside the handle 11, and when the upper part 21 of the releasing device 12 is pressed upwards towards the handle 11, this results in the lower part 24, that is inside the steering column 5 and to which the wire 13 is attached, also moving upwards together with the cable 13. This results in the toothed catch 15 being released from its engagement with the toothed segment 8, see Figure 4, and the steering device 1 being put in a position in which it can be pivoted.

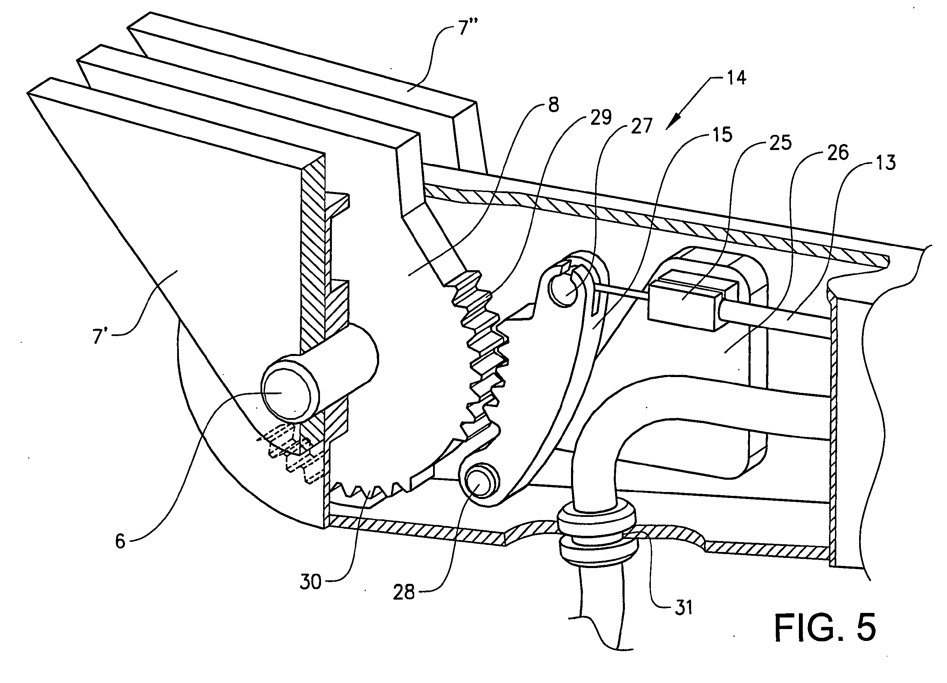

Figure 5 shows a side view of the locking device 14 in detail. The wire 13 is taken from the releasing mechanism 10 via a lug 25, attached to the steering column 5 by means of a fixing 26, to the toothed catch 15 with which it is connected on the upper side 27 of the catch. On the opposite side, the lower side, the toothed catch 15 is tensioned by means of a torsion spring 28 and is mounted in the steering column 5 in such a way that it can pivot. The toothed catch 15 interacts with the toothed segment 8, which is mounted on the pivot shaft 6 and is attached to the cab structure 3, during folding and locking of the steering device 1. Two separate toothed engagement surfaces are arranged on the toothed segment 8, an upper engagement surface 29 and a lower engagement surface 30, which upper engagement surface 29 interacts with the toothed catch 15 when the steering device 1 is to be locked in a raised active position, and which lower engagement surface 30 interacts with the toothed catch 15 when the steering device 1 is locked in a folded-away inactive position. The toothed segment 8 is designed with these two separate surfaces, in order to prevent the steering device 1 being locked in a middle position where the device is active and is thereby able to send control signals to the vehicle's wheels, if the driver turns the steering wheel 4 by mistake or knocks against this while releasing the steering device 1 in such a middle position.

The figure shows the locking device 14 in a position where the steering device 1 is set in a position in which it can pivot and the toothed catch 15 is released from engagement with the toothed segment 8. In this position, the releasing mechanism 10 has been pressed upwards towards the handle 11 which means that the cable 13 connected to the releasing mechanism 10 has also moved upwards, which in turn leads to the toothed catch 15 being moved in a direction away from the toothed segment 8 and thereby being released from engagement. When the steering device 1 is in the required position, it is locked by the releasing mechanism 10 being released, which results in the cable 13 moving downwards in the steering column 5 and the tensioned toothed catch 15 re-engaging with the toothed segment 8, whereby the steering column 5 is locked in the required position.

The figure also shows how the cables 16 for the electronic steering, that are surrounded by a protective sleeve 17, pass through an opening 31 in the steering column 5.

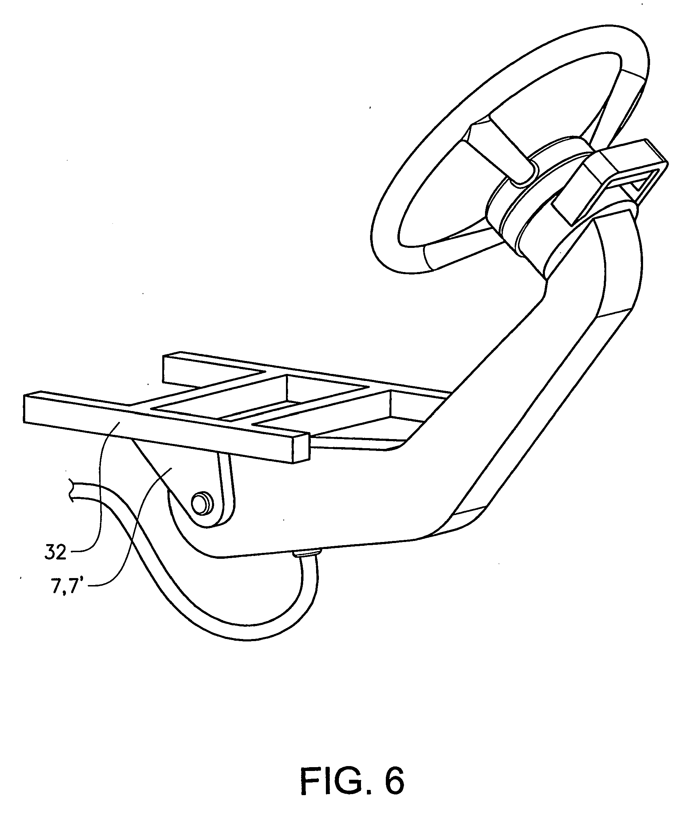

Figure 6 shows a preferred embodiment of the invention in which the steering device 1 is arranged under the driver's seat 2, more specifically fixings 7', 7" for the steering device are attached to a seat frame 32 that is arranged under the driver's seat 2, which seat frame 32 is connected to the cab structure 3. By this means, it is possible for the steering device 1 to be folded away essentially completely under the driver's seat 2 in a simple way when it is not being used by the driver, with the result that the driver's room to move and his field of vision are not restricted while carrying out work with the vehicle's implement.

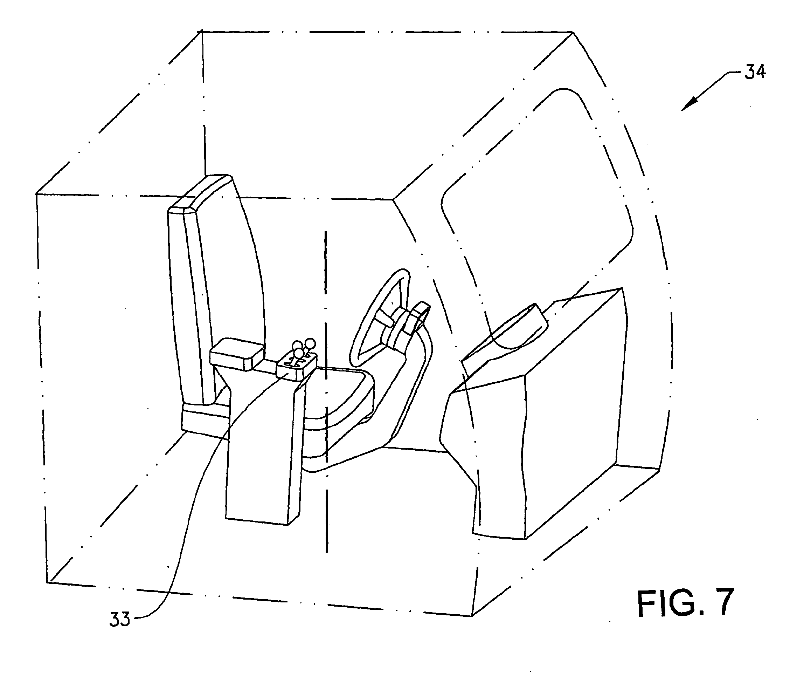

Figure 7 shows how an additional steering device 33 is arranged in the cab structure 3 for controlling the implement 34 attached to the vehicle.

The invention is not limited to the embodiments described above and illustrated in the drawings, but can be varied freely within the framework of the following claims.

For example, the handle comprised in the releasing mechanism can have a different design to the C-shaped design described above. The handle can, for example, be semicircular, with a corresponding shape for the releasing device that is arranged in the handle and interacts with this.

In addition, the steering device can be activated by a mechanical trigger arranged in the cab structure. When the steering device is raised, this is activated by the trigger being acted upon by the steering column when the steering column is moved upwards towards the driver's seat in order to be locked in its active position.

## Claims

1. A cab structure (3) for a vehicle comprising a driver's seat (2) and a steering device (1) arranged at least essentially in front of the said driver's seat (2), which steering device (1) comprises a steering wheel (4) arranged on a steering column (5), with the steering column (5) bering arranged to be able to be pivoted around a pivot shaft (6) from a first raised active position in front of and at least partially above the said driver's seat (2), to a second inactive position, with the steering device (1) in addition comprising a folding mechanism (9) arranged for adjusting the steering device (1) between the said positions, wherein, in its second inactive position, the steering device (1) is folded away essentially under the said driver's seat (2), **characterized in that** the steering wheel (4) is arranged for steering the vehicle in said first raised active position and that the steering column is arranged to be pivoted in one single motion around the pivot shaft (6) between said first raised active position and said second inactive position.

2. The cab structure (3) for a vehicle as claimed in claim 1, **characterized in that** the said steering device (1) is arranged centrally in front of the driver's seat (2).

3. The cab structure (3) for a vehicle as claimed in claim 1 or 2, **characterized in that** the said steering device (1) is arranged in the cab structure (3) on a seat frame (32) attached under the driver's seat (2).

4. The cab structure (3) for a vehicle as claimed in any one of the preceding claims, **characterized in that** the steering device (1) is arranged to be activated in its first raised position by a trigger arranged in the cab structure (1).

5. The cab structure (3) for a vehicle as claimed in any one of the preceding claims, **characterized in that** the steering column (5) is arranged to be able to be pivoted around an at least essentially horizontal pivot shaft (6).

6. The cab structure (3) for a vehicle as claimed in any one of the preceding claims, **characterized in that** the said folding mechanism (9) comprises a releasing mechanism (10) and a locking device (14) connected to the releasing mechanism (10).

7. The cab structure (3) for a vehicle as claimed in claim 6, **characterized in that** the said locking device (14) is connected to the releasing mechanism (10) by means of a wire (13).

8. The cab structure (3) for a vehicle as claimed in claim 6 or 7, **characterized in that** the said releasing mechanism (10) comprises a handle (11) connected to the steering column (5) and a releasing device (12) that interacts with the handle (11).

9. The cab structure (3) for a vehicle as claimed in claim 6, 7 or 8, **characterized in that** the said releasing mechanism (10) comprises a second trigger arranged in the releasing mechanism (10), which second trigger is arranged to inactivate the steering device (1), when the trigger is operated.

10. The cab structure (3) for a vehicle as claimed in any one of claims 6-9, **characterized in that** the said locking device (14) comprises a toothed catch (15) arranged in the steering column (5) under tension and a toothed segment (8) that interacts with the toothed catch (15).

11. The cab structure (3) for a vehicle as claimed in claim 10, **characterized in that** two separate toothed engagement surfaces are arranged on the said toothed segment (8), an upper engagement surface (29) and a lower engagement surface (30), the upper engagement surface (29) being arranged to interact with the toothed catch (15) when the steering device (1) is to be locked in a raised active position, and the lower engagement surface (30) being arranged to interact with the toothed catch (15) when the steering device (1) is locked in a folded-away inactive position.

12. The cab structure (3) for a vehicle as claimed in any one of the preceding claims, **characterized in that** the cab structure (3) comprises an additional steering device (33) for controlling an implement (34) attached to the vehicle.

13. The cab structure (3) for a vehicle as claimed in claim 12,
**characterized in that** the steering device (33) is arranged on one side of a center line passing through the driver's seat.

14. A vehicle comprising a cab structure (3) as claimed in any one of claims 1-10.

## Patentansprüche

1. Kabinenaufbau (3) für ein Fahrzeug mit einem Fahrersitz (2) und einer Lenkvorrichtung (1), die wenigstens im Wesentlichen vor dem Fahrersitz (2) angeordnet ist, wobei die Lenkvorrichtung (1) ein an einer Lenksäule (5) angeordnetes Lenkrad (4) umfasst, wobei die Lenksäule (5) so angeordnet ist, dass sie um eine Schwenkwelle (6) aus einer ersten angehobenen Aktivposition vor und wenigstens teilweise über dem Fahrersitz (2) in eine zweite Inaktivposition geschwenkt werden kann, wobei die Lenkvorrichtung (1) zusätzlich einen Klappmechanismus (9) umfasst, der zur Einstellung der Lenkvorrichtung (1) zwischen den Positionen angeordnet ist, wobei die Lenkvorrichtung (1) in ihrer zweiten Inaktivposition im Wesentlichen unter den Fahrersitz (2) weggeklappt ist, **dadurch gekennzeichnet, dass** das Lenkrad (4) zur Steuerung des Fahrzeugs in der ersten angehobenen Aktivposition angeordnet ist, und dass die Lenksäule so angeordnet ist, dass sie in einer einzigen Bewegung um die Schwenkwelle (6) zwischen der ersten angehobenen Aktivposition und der zweiten Inaktivposition geschwenkt werden kann.

2. Kabinenaufbau (3) für ein Fahrzeug nach Anspruch 1, **dadurch gekennzeichnet, dass** die Lenkvorrichtung (1) zentral vor dem Fahrersitz (2) angeordnet ist.

3. Kabinenaufbau (3) für ein Fahrzeug nach Anspruch 1 oder 2, **dadurch gekennzeichnet, dass** die Lenkvorrichtung (1) in dem Kabinenaufbau (3) auf einem unter dem Fahrersitz (2) befestigten Sitzrahmen (32) angeordnet ist.

4. Kabinenaufbau (3) für ein Fahrzeug nach einem der vorhergehenden Ansprüche, **dadurch gekennzeichnet, dass** die Lenkvorrichtung (1) so angeordnet ist, dass sie in ihrer ersten angehobenen Position durch einen Auslöser aktiviert wird, der in dem Kabinenaufbau (1) angeordnet ist

5. Kabinenaufbau (3) für ein Fahrzeug nach einem der vorhergehenden Ansprüche, **dadurch gekennzeichnet, dass** die Lenksäule (5) so angeordnet ist, dass sie um eine wenigstens im Wesentlichen horizontale Schwenkwelle (6) geschwenkt werden kann.

6. Kabinenaufbau (3) für ein Fahrzeug nach einem der vorhergehenden Ansprüche, **dadurch gekennzeichnet, dass** der Klappmechanismus (9) einen Freigabemechanismus (10) und eine Verriegelungsvorrichtung (14) umfasst, die mit dem Freigabemechanismus (10) verbunden ist.

7. Kabinenaufbau (3) für ein Fahrzeug nach Anspruch 6, **dadurch gekennzeichnet, dass** die Verriegelungsvorrichtung (14) mit dem Freigabemechanismus (10) mittels eines Kabels (13) verbunden ist.

8. Kabinenaufbau (3) für ein Fahrzeug nach Anspruch 6 oder 7, **dadurch gekennzeichnet, dass** der Freigabemechanismus (10) einen mit der Lenksäule (5) verbundenen Handgriff und eine Freigabevorrichtung (12) umfasst, die mit dem Handgriff (11) zusammenwirkt.

9. Kabinenaufbau (3) für ein Fahrzeug nach Anspruch 6, 7 oder 8, **dadurch gekennzeichnet, dass** der Freigabemechanismus (10) einen zweiten Auslöser umfasst, der in dem Freigabemechanismus (10) angeordnet ist, wobei der zweite Auslöser zur Deaktivierung der Lenkvorrichtung (1) angeordnet ist, wenn der Auslöser betätigt wird.

10. Kabinenaufbau (3) für ein Fahrzeug nach einem Ansprüche 6 bis 9, **dadurch gekennzeichnet, dass** die Verriegelungsvorrichtung (14) eine gezahnte Klinke (15), die in der Lenksäule (5) unter Spannung angeordnet ist, und ein Zahnsegment (8) umfasst, das mit der gezahnten Klinke (15) zusammenwirkt.

11. Kabinenaufbau (3) für ein Fahrzeug nach Anspruch 10, **dadurch gekennzeichnet, dass** zwei separate gezahnte Eingriffsflächen an dem gezahnten Segment (8) angeordnet sind, eine obere Eingriffsfläche (29) und eine untere Eingriffsfläche (30), wobei die obere Eingriffsfläche (29) für ein Zusammenwirken mit der gezahnten Klinke (15) angeordnet ist, wenn die Lenkvorrichtung (1) in einer angehobenen Aktivposition verriegelt werden soll, und die untere Eingriffsfläche (30) so angeordnet ist, dass sie mit der gezahnten Klinke (15) zusammenwirkt, wenn die Lenkvorrichtung (1) in einer weggeklappten Inaktivposition verriegelt wird.

12. Kabinenaufbau (3) für ein Fahrzeug nach einem der vorhergehenden Ansprüche, **dadurch gekennzeichnet, dass** der Kabinenaufbau (3) eine zusätzliche Lenkvorrichtung (33) zur Steuerung eines an dem Fahrzeug angebrachten Gerätes (34) umfasst.

13. Kabinenaufbau (3) für ein Fahrzeug nach Anspruch 12, **dadurch gekennzeichnet, dass** die Lenkvorrichtung (33) an einer Seite einer Mittellinie angeordnet ist, die durch den Fahrersitz hindurchgeht.

14. Fahrzeug mit einem Kabinenaufbau (3) nach einem der Ansprüche 1 bis 10.

## Revendications

1. Structure de cabine (3) pour un véhicule, comprenant un siège de conducteur (2) et un dispositif de direction (1) disposé au moins sensiblement en face dudit siège de conducteur (2), le dispositif de direction (1) comprenant un volant (4) disposé sur une colonne de direction (5), la colonne de direction (5) étant disposée de sorte à pouvoir pivoter autour d'un arbre de pivot (6) à partir d'une première position élevée active, située devant et au moins en partie au-dessus du siège de conducteur (2), vers une deuxième position inactive, le dispositif de direction (1) comprenant en outre un mécanisme pliant (9) disposé de sorte à régler le dispositif de direction (1) entre lesdites positions, dans lequel, dans sa deuxième position inactive, le dispositif de direction (1) est replié à l'écart et sensiblement en dessous dudit siège de conducteur (2), **caractérisée en ce que** le volant (4) est disposé pour diriger le véhicule dans ladite première position élevée active, et **en ce que** la colonne de direction est disposée pour être pivotée en un seul mouvement autour de l'arbre de pivot (6) entre ladite première position élevée active et ladite seconde position inactive.

2. Structure de cabine (3) pour un véhicule selon la revendication 1, **caractérisée en ce que** ledit dispositif de direction (1) est disposé centralement devant le siège de conducteur (2).

3. Structure de cabine (3) pour un véhicule selon la revendication 1 ou 2, **caractérisée en ce que** ledit dispositif de direction (1) est disposé dans la structure de cabine (3) sur un châssis de siège (32) fixé sous le siège de conducteur (2).

4. Structure de cabine (3) pour un véhicule selon l'une quelconque des revendications précédentes, **caractérisée en ce que** ledit dispositif de direction (1) est disposé pour être activé dans sa première position élevée par un déclencheur disposé dans la structure de cabine (1).

5. Structure de cabine (3) pour un véhicule selon l'une quelconque des revendications précédentes, **caractérisée en ce que** la colonne de direction (5) est disposée de sorte à pouvoir pivoter autour d'au moins un arbre de pivot essentiellement horizontal (6).

6. Structure de cabine (3) pour un véhicule selon l'une quelconque des revendications précédentes, **caractérisée en ce que** ledit mécanisme pliant (9) comprend un mécanisme de libération (10), et un dispositif de verrouillage (14) relié au mécanisme de libération (10).

7. Structure de cabine (3) pour un véhicule selon l'une quelconque des revendications précédentes, **caractérisée en ce que** ledit dispositif de verrouillage (14) est relié au mécanisme de libération (10) par l'intermédiaire d'un fil (13).

8. Structure de cabine (3) pour un véhicule selon la revendication 6 ou 7, **caractérisée en ce que** ledit mécanisme de libération (10) comprend une poignée (11) reliée à la colonne de direction (5), et un dispositif de libération (12) qui interagit avec la poignée (11).

9. Structure de cabine (3) pour un véhicule selon la revendication 6, 7, ou 8, **caractérisée en ce que** ledit mécanisme de libération (10) comprend un second déclencheur disposé dans le mécanisme de libération (10), le second déclencheur étant disposé pour inactiver le dispositif de direction (1), lorsque le déclencheur est actionné.

10. Structure de cabine (3) pour un véhicule selon l'une quelconque des revendications 6 à 9, **caractérisée en ce que** ledit dispositif de verrouillage (14) comprend un loquet denté (15) disposé dans la colonne de direction (5) sous tension, et un segment denté (8) qui interagit avec le loquet denté (15).

11. Structure de cabine (3) pour un véhicule selon la revendication 10, **caractérisée en ce que** deux surfaces d'engrènement dentées séparées sont disposées sur ledit segment denté (8), une surface d'engrènement supérieure (29) et une surface d'engrènement inférieure (30), la surface d'engrènement supérieure (29) étant disposée pour interagir avec le loquet denté (15) lorsque le dispositif de direction (1) est verrouillé dans une position inactive repliée.

12. Structure de cabine (3) pour un véhicule selon l'une quelconque des revendications précédentes, **caractérisée en ce que** la structure de cabine (3) comprend un dispositif de direction supplémentaire (33) pour contrôler un outil (34) fixé sur le véhicule.

13. Structure de cabine (3) pour un véhicule selon la revendication 12, **caractérisée en ce que** le dispositif de direction (33) est disposé sur un côté d'une ligne centrale passant à travers le siège du conducteur.

14. Véhicule comprenant une structure de cabine (3) selon l'une quelconque des revendications 1 à 10.
